(19) Europäisches Patentamt
European Patent Office
Office européen des brevets

(11) Veröffentlichungsnummer : **0 245 207 B1**

# (12) EUROPÄISCHE PATENTSCHRIFT

(45) Veröffentlichungstag der Patentschrift :
**05.02.92 Patentblatt 92/06**

(51) Int. Cl.$^5$ : **C08K 5/53**

(21) Anmeldenummer : **87810279.7**

(22) Anmeldetag : **30.04.87**

## (54) Phosphonsäuresalze enthaltende flammfeste Polymer-Zusammensetzungen.

Die Akte enthält technische Angaben, die nach dem Eingang der Anmeldung eingereicht wurden und die nicht in dieser Patentschrift enthalten sind.

(30) Priorität : **09.05.86 GB 8611357**

(43) Veröffentlichungstag der Anmeldung :
**11.11.87 Patentblatt 87/46**

(45) Bekanntmachung des Hinweises auf die Patenterteilung :
**05.02.92 Patentblatt 92/06**

(84) Benannte Vertragsstaaten :
**DE FR GB IT NL**

(56) Entgegenhaltungen :
**FR-A- 2 204 658**

(73) Patentinhaber : **CIBA-GEIGY AG**
**Klybeckstrasse 141**
**CH-4002 Basel (CH)**

(72) Erfinder : **Richardson, Norman**
**21, Grey Street**
**Middleton Manchester M24 3UF (GB)**
Erfinder : **Dellar, Richard John, Dr.**
**2 Wellington Road**
**Timperley Cheshire WA15 8QY (GB)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Gegenstand der Erfindung sind Phosphonsäuresalze enthaltende flammfeste Polymer-Zusammensetzungen.

Polymere, besonders halogenfreie Polymere, werden im allgemeinen dadurch flammfest gemacht, dass man diesen phosphorhaltige Verbindungen, halogenhaltige Verbindungen oder Gemische davon einverleibt. Einige Polymere werden bei hohen Temperaturen, z.B. bei 250°C oder höheren Temperaturen verarbeitet. Aus diesem Grund eignen sich viele bekannte Flammhemmer nicht für solche Anwendungen, weil sie zu flüchtig oder nicht ausreichend hitzebeständig sind.

Es wurde nun eine neue Klasse von bei hohen Temperaturen hitzestabilen Verbindungen gefunden, die sich zur Anwendung als Flammhemmer in einer Vielzahl von Kunststoffen eignen. Diese Verbindungen verursachen auch kein unerwünschtes Weichmachen von steifen Polymeren. Demgemäss betrifft die vorliegende Erfindung Zusammensetzungen enthaltend ein halogenfreies Polymer und als Flammhemmer mindestens ein Metall- oder Metalloidsalz einer Phosphonsäure der Formel I

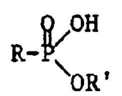

(I),

worin R geradkettiges oder verzweigtes Alkyl mit 1-3 C-Atomen, das gegebenenfalls durch ein oder mehrere Halogenatome oder eine oder mehrere Hydroxylgruppen substituiert ist, und R′ Wasserstoff oder eine Alkylgruppe mit 1-3 C-Atomen bedeuten und worin das Metall oder Metalloid ausgewählt ist aus den Gruppen IIA, IIB, IIIA, IVA und VA des Periodensystems (Fisher Scientific Company, 1968).

Als Halogenatome in Alkylgruppen R kommen z.B. Fluor-, Brom- und Chloratome in Betracht. Beispiele von Halogenalkylgruppen R sind Chlormethyl, Brommethyl, Trifluormethyl, Dichlormethyl, Dibrommethyl, 2-Chlorethyl, 1-Chlorpropyl und 1-Brompropyl. Sind Alkylgruppen R durch Hydroxylgruppen substituiert, so handelt es sich bevorzugt um durch eine Hydroxylgruppe substituierte Reste, wie Hydroxymethyl, 2-Hydroxyethyl und 3-Hydroxypropyl.

R stellt vorzugsweise unsubstituiertes Alkyl mit 1-3 C-Atomen und insbesondere Methyl dar. R′ ist vorzugsweise Wasserstoff oder Methyl.

Das Metall oder Metalloid kann z.B. Magnesium, Calcium, Barium, Zink, Bor, Aluminium, Zinn oder Antimon sein. Bevorzugt ist das Metall Magnesium oder Aluminium insbesondere Aluminium. Ganz besonders bevorzugt sind Zusammensetzungen, worin R und R′ je Methyl sind und das Metall Aluminium ist.

Die Salze können als einfach ionische Verbindungen aus den Anionen der Phosphonsäure und den Kationen des Metalls oder Metalloids vorliegen.

Stellt R′ Wasserstoff dar und weist das Metall oder Metalloid eine Wertigkeit von grösser als eins auf, so kann das Salz eine polymere Struktur aufweisen gemäss folgender Formel II

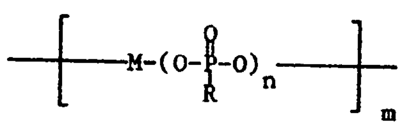

(II),

worin R die oben angegebene Bedeutung hat, M ein Metall oder Metalloid darstellt, n einen der Wertigkeit von M minus 1 einsprechenden Wert aufweist, m eine Zahl von 2-100 bedeutet und worin Jede Gruppe

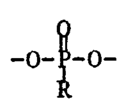

nur an M-Atome gebunden ist.

Als Beispiele von erfindungsgemäss zu verwendenden Phosphonsäuresalzen seien genannt:

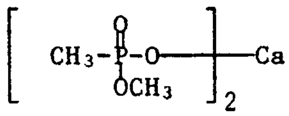 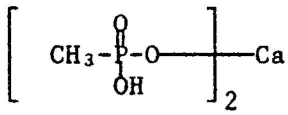 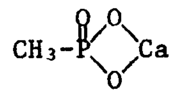

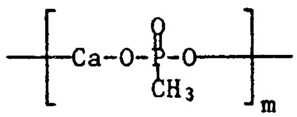 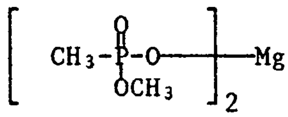 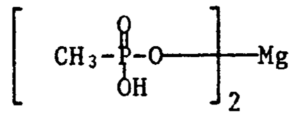

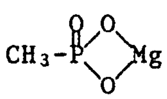 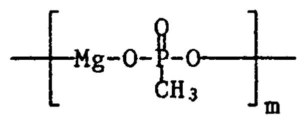 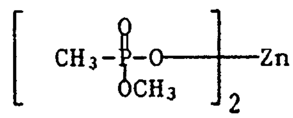

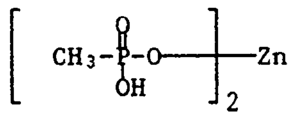 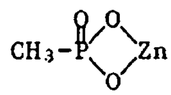 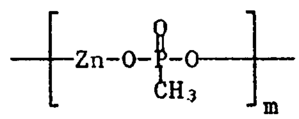

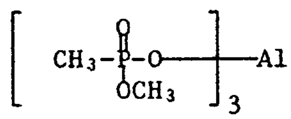 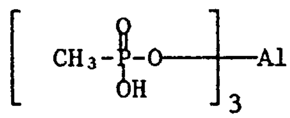 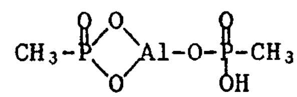

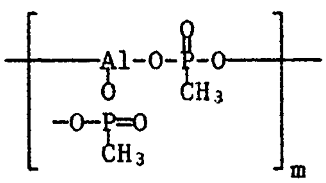 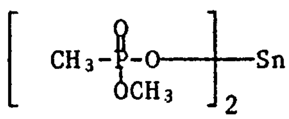 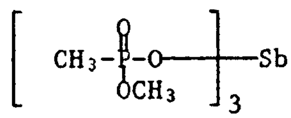

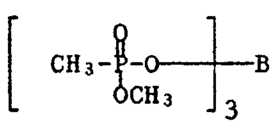 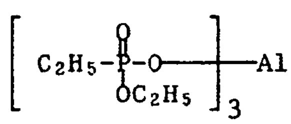 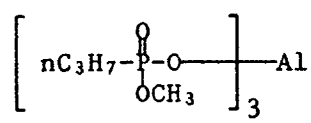

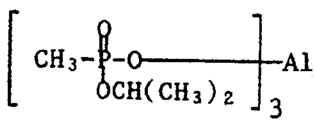 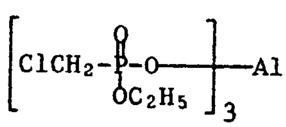 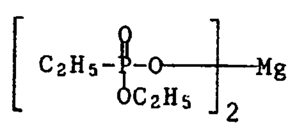

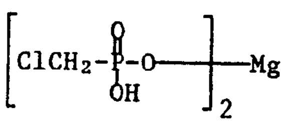 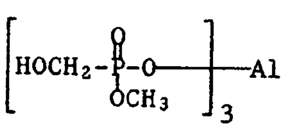 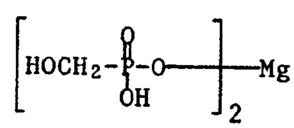

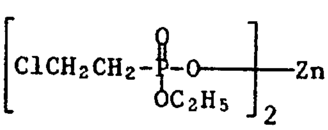 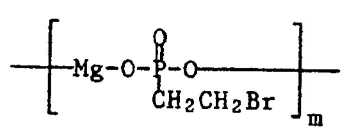 .

Die definitionsgemässen Phosphonsäuresalze sind entweder bekannt oder können nach an sich bekannten Methoden hergestellt werden. Phosphonsäure oder dessen Natriumsalz können mit Metallcarbonaten oder

Metalloxiden z.B. wie folgt umgesetzt werden:

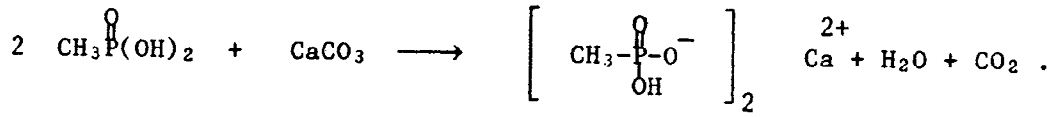

Das Natriumsalz der Phosphonsäure oder dessen Teilester kann auch in wässrigem Medium mit einem nicht wasserlöslichen Metallsalz z.B. wie folgt umgesetzt werden:

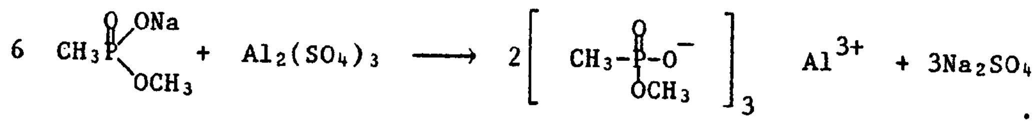

Gemäss einem weiteren Verfahren werden Phosphonsäureester mit Metallhalogeniden oder Metallalkoxiden umgesetzt, z.B. wie folgt:

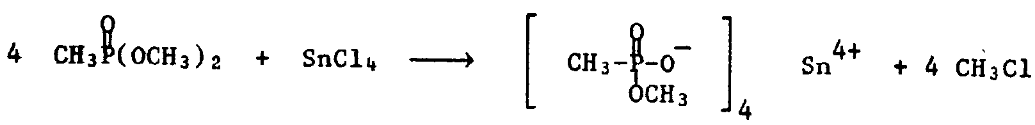

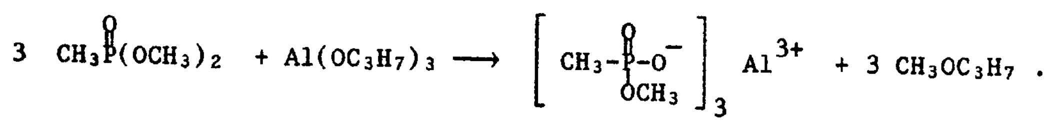

Die Menge des den Polymeren als Flammhemmer zuzusetzenden Phosphonsäuresalzes kann innerhalb weiter Grenzen variieren. Im allgemeinen verwendet man 0,1 bis 100 Gewichtsteile, bezogen auf 100 Gewichtsteile des Polymeren. Bevorzugt verwendet man 0,5 bis 30 Gewichtsteile und besonders bevorzugt 2 bis 20 Gewichtsteile Phosphonsäuresalz, bezogen auf 100 Gewichtsteile des Polymeren. Die optimale Menge hängt von der Natur des Polymeren und der Art des eingesetzten Phosphonsäuresalzes ab und kann leicht durch Versuche ermittelt werden. Da die Phosphonsäuresalze im allgemeinen schon bei geringen Zusatzmengen wirksam sind, verursachen sie im Polymeren gegenüber anderen bekannten Flammhemmern weniger unerwünschte Effekte.

Die Salze können je nach Art des verwendeten Polymeren und den gewünschten Eigenschaften in verschiedener physikalischer Form angewendet werden. So können die Salze z.B. zur Erzielung einer besseren Dispersion im Polymeren zu einer feinteiligen Form vermahlen werden. Falls erwünscht, können auch Gemische verschiedener Salze eingesetzt werden.

Die Phosphonsäuresalze können in verschiedenen Polymeren angewendet werden. Geeignete Polymere, die damit flammfest gemacht werden können, sind z.B.

1. Polyphenylenoxide und -sulfide sowie Gemische dieser Polymeren mit Polystyrolpfropfpolymeren oder Styrolcopolymeren, wie z.B. hoch schlagfestes Polystyrol, und EPDM-Copolymere mit Kautschuken, sowie Gemische von Polyphenylenoxiden mit Polyamiden und Polyestern.

2. Polyurethane, die sich von Polyethern, Polyestern oder Polybutadien mit endständigen Hydroxylgruppen einerseits und aliphatischen oder aromatischen Polyisocyanaten andererseits ableiten, einschliesslich Polyisocyanurate und Vorläufer davon.

3. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, Polyamid 6/10, Polyamid 11, Polyamid 12, Poly-2,4,4-trimethylhexamethylenterephthalamid oder Poly-m-phenylenisophthalamid sowie Copolymere davon mit Polyethern, wie z.B. mit Polyethylenglykolen, Polypropylenglykolen oder Polytetramethylenglykolen.

4. Polyester, die sich von Dicarbonsäuren und Dialkoholen und/oder Hydroxycarbonsäuren oder den entsprechenden Lactonen ableiten, wie z.B. Polyethylenterephthalat, Polybutylenterephthalat, Poly-1,4-dimethylol-cyclohexan-terephthalat und Polyhydroxybenzoate sowie Block-Copolyester-ester, die sich von Polyether mit endständigen Hydroxylgruppen ableiten.

5. Ungesättigte Polyester die sich von Copolyestern aus gesättigten und ungesättigten Dicarbonsäuren und mehrwertigen Alkoholen und Vinylverbindungen als Vernetzungsmittel ableiten.

6. Polystyrol.

7. Pfropfcopolymere von Styrol, wie z.B. Styrol auf Polybutadien, Styrol und Acrylnitril auf Polybutadien, Styrol und Alkylacrylate oder -methacrylate auf Polybutadien, Styrol und Acrylnitril auf Ethylen/Propylen/Dien-Terpolymere, Styrol und Acrylnitril auf Acrylat/Butadien-Copolymere, sowie Gemische davon mit statistischen Copolymeren aus Styrol oder α-Methylstyrol und Dienen oder Acrylsäurederivaten, wie z.B. die als ABS, MBS, ASA oder AES bekannten Styrol-Terpolymere.

8. Vernetzte Epoxidharze, die sich von Polyepoxiden ableiten, wie z.B. von Bis-diglycidylethern, besonders Bisphenol-A-diglycidylethern, oder von cycloaliphatischen Diepoxiden.

9. Polycarbonate.

Die erfindungsgemässen Zusammensetzungen können auch weitere übliche Zusätze enthalten, wie z.B. Hitzestabilisatoren, Lichtstabilisatoren, UV-Absorber, Antioxidantien, antistatische Mittel, Konservierungsmittel, Haftvermittler, Füllstoffe, Pigmente, Schmierstoffe, Verschäumungsmittel, Fungizide, Weichmacher, Verarbeitungshilfsmittel, weitere flammhemmende Zusätze und Mittel zum Verringern der Rauchentwicklung.

Als zusätzliche Flammhemmer, die zusammen mit den erfindungsgemäss verwendeten Phosphonsäuresalzen eingesetzt werden können, kommen z.B. phosphorhaltige Ester und Salze, wie Triarylphosphate, Alkylarylphosphate und Ammoniumpolyphosphate, halogen-, besonders brom-und chlorhaltige Verbindungen, wie Decabromdiphenylether, Hexachlorcyclopentadien, bromiertes Polystyrol, Halogenalkylphosphate und -phosphonatester, Antimontrioxid, Aluminuimhydroxid, Wismutoxid, Molybdänoxid oder Gemische dieser Verbindungen mit Zink- und/oder Magnesiumoxid oder -salzen, in Betracht.

Die Erfindung wird durch die folgenden Beispiele näher erläutert. Sofern nichts anderes angegeben ist, bedeuten Teile Gewichtsteile.

Beispiel 1:

95,3 g (1 Mol) wasserfreies Magnesiumchlorid werden portionenweise mit 496 g (4 Mol) Dimethylmethylphosphonat versetzt. Während dieser Zugabe wird mit einem Eis-Wasserbad gekühlt, um die Temperatur unterhalb 55°C zu halten. Nach Beendigung der Zugabe wird die Temperatur im Verlaufe von 2 Stunden vorsichtig auf 140°C erhöht und dann während weiterer 10 Stunden bei 140°C gehalten. Nach dem Abkühlen auf Umgebungstemperatur wird die erhaltene viskose Lösung mit 200 ml Methanol verdünnt und zum Entfernen von Spuren unlöslichen Materials filtriert. Die Lösung wird auf ein Volumen von ca. 400 ml konzentriert, und das Reaktionsprodukt wird durch Zugabe von 1 Liter Aceton isoliert. Nach dem Filtrieren und dem Trocknen unter Vakuum bei 50°C erhält man 160,7 g eines weissen Feststoffes, der bei 107-109°C schmilzt.
Elementaranalyse für: $C_4H_{12}MgO_6P_2$:
berechnet: C 19,81 % H 4,95 % P 25,59 % Mg 10,03 %
gefunden: C 19,57 % H 4,95 % P 25,77 % Mg 9,66 %.

Beispiel 2:

28,7 g (0,215 Mol) wasserfreies Aluminiumchlorid werden portionenweise zu 160 g (1,29 Mol) Dimethylmethylphosphonat gegeben, wobei mit einem Eis-Wasserbad gekühlt wird, um die Temperatur unterhalb 60°C zu halten. Nach Beendigung der Zugabe wird die Temperatur im Verlaufe von 1 Stunde langsam auf 140°C erhöht und während zwei weiteren Stunden bei 140°C gehalten. Anschliessend wird das Reaktionsgemisch auf 25°C abgekühlt und mit 200 ml Aceton verdünnt. Das entstandene weisse kristalline Reaktionsprodukt wird mittels Filtration isoliert, zweimal mit 100 ml Aceton gewaschen und unter Vakuum bei 50°C getrocknet. Man erhält 62,5 g Produkt mit einem Schmelzpunkt >250°C.
Elementaranalyse für: $C_6H_{18}AlO_9P_3$:
berechnet: C 20,34 % H 5,08 % Al 7,63 % P 26,27 %
gefunden: C 19,97 % H 5,08 % Al 7,37 % P 25,97 %.

Beispiel 3:

Nach dem in Beispiel 2 beschriebenen Verfahren werden 62,0 g (0,5 Mol) Dimethylmethylphosphonat mit 27,8 g (0,25 Mol) wasserfreiem Calciumchlorid umgesetzt. Man erhält 54,0 g eines farblosen Feststoffes mit

einem Schmelzpunkt >250°C.
Elementaranalyse für: $C_4H_{12}CaO_6P_2 \cdot H_2O$:
berechnet: C 17,39 % H 5,07 % P 22,46 %
gefunden: C 17,44 % H 4,67 % P 23,17 %.

Beispiel 4:

75,84 g (0,4 Mol) Zinn(II)chlorid werden bei Raumtemperatur portionenweise zu 198,4 g (1,6 Mol < 2 Mol Ueberschuss) Dimethylmethylphosphonat gegeben. Die Temperatur wird langsam auf 140°C erhöht und bei 140°C gehalten, bis die Entwicklung von Methylchloridgas beendet ist. Das Reaktionsgemisch wird auf Raumtemperatur abgekühlt. Bei 50-45°C fällt aus der Lösung ein Feststoff aus, aber das Gemisch ist immer noch beweglich. Anschliessend gibt man 200 ml Aceton zu und kühlt die Lösung in einem Eisbad. Nach dem Filtrieren und dem Trocknen unter Vakuum erhält man 98,1 g eines weissen Feststoffes mit einem Schmelzpunkt von 115-117°C.
Elementaranalyse für: $C_4H_{12}O_6P_2Sn$:
berechnet: C 14,26 % H 3,57 % P 18,42 % Sn 35,23 %
gefunden: C 14,31 % H 3,51 % P 18,23 %.

Beispiel 5:

54,5 g (0,4 Mol) Zink(II)chlorid werden portionenweise zu 198,4 g (1,6 Mol = 2 Mol Ueberschuss) Dimethylmethylphosphonat gegeben. Während der Zugabe muss mit einem Eisbad gekühlt werden, um die Temperatur unter 40°C zu halten. Nach Beendigung der Zugabe wird die Temperatur langsam auf 140°C erhöht und diese Temperatur wird gehalten, bis die Entwicklung von Methylchloridgas beendet ist. Anschliessend wird das Reaktionsgemisch auf Raumtemperatur abgekühlt und unter Zugabe von 200 ml Aceton gerührt. Nach dem Filtrieren und Trocknen unter Vakuum erhält man 102,7 g eines weissen Feststoffes mit einem Schmelzpunkt von 151-153°C.
Elementaranalyse für: $C_4H_{12}O_6P_2Zn$:
berechnet: C 16,94 % H 4,24 % P 21,88% Zn 23,05 %
gefunden: C 16,97 % H 4,27 % P 21,90 % Zn 22,95 %.

Beispiel 6:

Eine Lösung von 57,6 g (0,6 Mol) Methylphosphonsäure in 70 ml deionisiertem Wasser wird bei Umgebungstemperatur tropfenweise zu einer Suspension von 23,4 g (0,10 Mol) Aluminiumcarbonat in 300 ml deionisiertem Wasser gegeben. Das Reaktionsgemisch wird eine Stunde gerührt, dann während 4 Stunden zum Rückfluss erhitzt, abgekühlt und filtriert. Durch Konzentration des Filtrats bis zur Trockne erhält man einen farblosen Feststoff mit einem Schmelzpunkt von 187-192°C.
Elementaranalyse für: $C_3H_{12}AlO_9P_3 \cdot H_2O$:
berechnet: C 10,91 % H 4,24 % P 28,18 %
gefunden: C 11,03 % H 3,87 % P 28,74 %.

Beispiel 7:

Nach dem in Beispiel 6 beschriebenen Verfahren werden 67,2 g (0,7 Mol) Methylphosphonsäure mit 33,3 g (0,33 Mol) Calciumcarbonat umgesetzt. Man erhält 73,7 g eines farblosen Feststoffes mit einem Schmelzpunkt über 250°C.
Elementaranalyse für: $C_2H_8O_6CaP_2$:
berechnet: C 10,43 % H 3,48 % P 26,96 % Ca 17,39 %
gefunden: C 10,51 % H 3,51 % P 27,18 % Ca 16,81 %.

Beispiel 8:

Nach dem in Beispiel 2 beschriebenen Verfahren werden 83 g (0,5 Mol) Diethylethanphosphonat mit 13,4 g (0,1 Mol) wasserfreiem Aluminiumchlorid umgesetzt. Man erhält 35 g eines farblosen Feststoffes mit einem Schmelzpunkt über 250°C.
Elementaranalyse für: $C_{12}H_{30}AlO_9P_3$:
berechnet: C 32,80 % H 6,85 % P 21,23 % Al 6,16 %

gefunden: C 31,80 % H 6,59 % P 21,29 % Al 6,14 %.

Beispiel 9:

Nach dem in Beispiel 2 beschriebenen Verfahren werden 152 g (1,0 Mol) Dimethylpropylphosphonat mit 26,7 g (0,2 Mol) wasserfreiem Aluminiumchlorid umgesetzt. Man erhält 88,5 g eines farblosen Feststoffes mit einem Schmelzpunkt über 250°C.
Elementaranalyse für: $C_{12}H_{30}AlO_9P_3$:
berechnet: C 32,80 % H 6,85 % P 21,23% Al 6,16 %
gefunden: C 32,74 % H 7,13 % P 21,48 % Al 5,64 %.

Beispiel 10:

Nach dem in Beispiel 2 beschriebenen Verfahren werden 149,2 g (0,8 Mol) Diethylchlormethylphosphonat mit 26,7 g (0,2 Mol) wasserfreiem Aluminiumchlorid umgesetzt. Man erhält 86,3 g eines farblosen Feststoffes mit einem Schmelzpunkt über 250°C.
Elementaranalyse für: $C_9H_{21}AlCl_3O_9P_3$:
berechnet: C 21,62 % H 4,20 % P 18,62 % Cl 21,32 % Al 5,41 %
gefunden: C 21,08 % H 4,15 % P 18,41 % Cl 21,61 % Al 5,50 %.

Beispiel 11:

Nach dem in Beispiel 2 beschriebenen Verfahren werden 168 g (1,0 Mol) Diethylhydroxymethylphosphonat mit 26,7 g (0,2 Mol) wasserfreiem Aluminiumchlorid umgesetzt. Man erhält 64,6 g eines farblosen Feststoffes mit einem Schmelzpunkt über 250°C.
Elementaranalyse für: $C_9H_{24}AlO_{12}P_3$:
berechnet: C 24,32 % H 5,41 % P 20,95 % Al 6,08 %
gefunden: C 24,38 % H 5,44 % P 20,33 % Al 5,93 %.

Beispiel 12:

Nach dem in Beispiel 2 beschriebenen Verfahren werden 54,0 g (0,3 Mol) Diisopropylmethylphosphonat mit 13,4 g (0,1 Mol) wasserfreiem Aluminiumchlorid umgesetzt. Man erhält 18,0 g eines farblosen Feststoffes mit einem Schmelzpunkt über 250°C.
Elementaranalyse für: $C_{12}H_{30}AlO_9P_3$:
berechnet: C 32,88 % H 6,85 % P 21,23 % Al 6,16 %
gefunden: C 32,20 % H 7,02 % P 21,21 % Al 6,01 %.

Beispiel 13:

69,4 g (0,33 Mol) Bariumchlorid werden zu 206,5 g (1,66 Mol) Dimethylmethylphosphonat gegeben, und das Gemisch wird auf 140°C erhitzt, bis keine Gasentwicklung mehr feststellbar ist. Das Reaktionsgemisch wird anschliessend abgekühlt und filtriert. Das entstandene feste Produkt wird gesammelt, mit Aceton gewaschen und unter Vakuum bei 60°C bis zur Gewichtskonstanz getrocknet. Man erhält 115,2 g eines farblosen Feststoffes mit einem Schmelzpunkt über 250°C.
Elementaranalyse für: $C_4H_{12}BaO_6P_2$:
berechnet: C 13,51 % H 3,38 % P 17,45 % Ba 38,64 %
gefunden: C 13,81 % H 3,30 % P 17,32 % Ba 40,25 %.

Beispiel 14:

90,4 g (0,25 Mol) Antimon(III)bromid werden mit 186 g (1,5 Mol) Dimethylmethylphosphonat während 2 Stunden bei 120°C umgesetzt. Das Reaktionsgemisch wird abgekühlt, mit Aceton verdünnt und filtriert. Das entstandene feste Produkt wird gesammelt, mit Aceton gewaschen und unter vermindertem Druck bei 60°C bis zur Gewichtskonstanz getrocknet. Man erhält 60 g eines farblosen Feststoffes mit einem Schmelzpunkt über 250°C und der folgenden Mikroanalyse:
C 8,84 % H 2,12 % P 15,88 % Sb 43,74 %.

Beispiele 15-28:

Aus je 12 Gewichtsteilen der in der folgenden Tabelle 1 angegebenen Salze und 100 Gewichtsteilen eines Polymeren auf der Basis von Polystyrol und Polyphenylenoxid (Noryl 731® der Fa. General Electric) werden durch Vermengen in der Schmelze bei 230°C die zu prüfenden Stoffgemische hergestellt.

Der Sauerotoffindex der Stoffgemische (OI) wird gemäss British Standard 2782, Teil 1, Methode 141A, 1983 bestimmt, die Flammfestigkeit (Entflammbarkeit) gemäss der "Flammfestprüfung für Kunststoffe, UL 94", vom 1. Februar 1984. Die Ergebnisse sind in der Tabelle 1 zusammengefasst.

Tabelle 1:

| Beispiel Nr. | Salz gemäss Beispiel Nr. | OI % | UL 94 |
|---|---|---|---|
| - | ohne | 22,3 | HB |
| 15 | 1 | 29,0 | VE 1 |
| 16 | 2 | 28,2 | VE 0 |
| 17 | 3 | 27,6 | VE 1 |
| 18 | 4 | 26,5 | VE 1 |
| 19 | 5 | 25,9 | VE 1 |
| 20 | 6 | 27,3 | VE 1 |
| 21 | 7 | 26,7 | VE 1 |
| 22 | 8 | 25,2 | VE 1 |
| 23 | 9 | 26,9 | VE 0 |
| 24 | 10 | 26,0 | VE 1 |
| 25 | 11 | 24,4 | VE 2 |
| 26 | 12 | 25,5 | VE 2 |
| 27 | 13 | 26,2 | VE 1 |
| 28 | 14 | 23,8 | VE 1 |

Die obigen Resultate belegen die flammhemmende Wirkung der definitionsgemässen Salze; höhere Sauerstoffindexwerte OI bedeuten eine höhere flammhemmende Wirkung. Höhere UL-Werte (Underwriter Laboratories) bedeuten ebenfalls bessere flammhemmende Wirkung nach folgender Skala: VE 0 bester Wert, gefolgt von VE 1, VE 2 und schliesslich HB (vollständiges Abbrennen der Probe).

Beispiele 29-31:

Aus Je 12 Gewichtsteilen der in der folgenden Tabelle 2 angegebenen Salze und 100 Gewichtsteilen Nylon 66 werden durch Vermengen in der Schmelze bei 270°C Stoffgemische hergestellt, an denen wie in den Beispielen 15-28 beschrieben der Sauerstoffindex und die UL 94-Werte bestimmt werden. Die Ergebnisse sind in Tabelle 2 zusammengefasst.

Tabelle 2:

| Beispiel Nr. | Salz gemäss Beispiel Nr. | OI % | UL 94 |
|---|---|---|---|
| - | ohne | 21,3 | HB |
| 29 | 2 | 24,7 | VE 2 |
| 30 | 9 | 22,4 | VE 2 |
| 31 | 4 | 22,7 | VE 2 |

Beispiele 32-34:

Aus Je 12 Gewichtsteilen der in der folgenden Tabelle 3 angegebenen Salze und 100 Gewichtsteilen Polybutylenterephthalat werden durch Vermengen in der Schmelze bei 270°C Stoffgemische hergestellt, an denen wie in den Beispielen 15-28 beschrieben der Sauerstöffindex und die UL 94-Werte bestimmt werden. Die Ergebnisse sind in Tabelle 3 zusammengefasst.

Tabelle 3:

| Beispiel Nr. | Salz gemäss Beispiel Nr. | OI % | UL 94 |
|---|---|---|---|
| - | ohne | 19,0 | HB |
| 32 | 2 | 22,5 | VE 2 |
| 33 | 9 | 20,9 | VE 2 |
| 34 | 4 | 20,3 | VE 2 |

Beispiele 35-39:

Zur Ermittlung der flammhemmenden Wirkung werden die folgenden Formulierungen verwendet:

| Komponenten | Konzentration (Gewichtsteile) |
|---|---|
| Thanol R 650x® (aromatischer Polyol der Fa. Texaco Chemical Co.) | 100 |
| Wasser | 0,2 |
| silikonhaltiges oberflächenaktives Mittel (Polyurax® SR 393 der Fa. BP Chemicals) | 2 |
| Trichlorfluormethan | 40 (bis zum Erreichen einer Schaumdichte von 30 kg/m$^3$) |
| Suprasec DND® (polymeres Diphenylmethan-diisocanat der Fa. ICI) | bis zum Erreichen des Index 1,05 |

Die obigen Komponenten werden bei Raumtemperatur während 10 Sekunden in einem Schnellrührer (2000 Umdrehungen/Minute) miteinander vermischt, wobei die Isocyanatkomponente zuletzt zugegeben wird, und anschliessend sofort in eine Karton-Form gegossen. Man lässt den Schaum durch die eintretende exotherme Reaktion aufsteigen. Die Zeitspanne von der Zugabe des Isocyanats bis zum Auftreten einer sahneartigen Beschaffenheit der Mischungen wird als "Startzeit" bezeichnet. Die für das Erreichen der maximalen Schaumhöhe benötigte Zeit wird als Steigzeit bezeichnet. Schliesslich wird die Zeit, bis der Schaum nicht mehr

klebrig ist, als Klebfreizeit bezeichnet. Nach dem Erreichen der Klebfreiheit wird der Schaum während 3 Tagen bei Umgebungstemperatur gealtert.

Nach drei Tagen Lagerung werden aus dem Schaum Prüflinge herausgeschitten und diese der Grenzsauerstoffindex Prüfung ("Limiting Oxygen Index Test") und der vertikalen Brennprüfung gemäss DIN 4102 B2 unterworfen. Die Ergebnisse sind in Tabelle 4 zusammengefasst.

Tabelle 4:

| Beispiel Nr. | Salz gemäss Bsp. Nr. | Schaum-Parameter | | | OI % | DIN 4102 B2-Prüfung | | |
|---|---|---|---|---|---|---|---|---|
| | | Startzeit (Sek.) | Steigzeit (Sek.) | Klebfreizeit (Sek.) | | Zeit bis Index 1,05 (Sek.) | max. Höhe der Flamme (cm) | Brennzeit (Sek.) |
| - | ohne | 17 | 70 | 120 | <21,0 | 3 | >20 | >60* |
| 35 | 1 | 21 | 59 | 118 | 22,7 | 5 | 15 | 11 |
| 36 | 2 | 16 | 57 | 104 | 23,7 | - | 14 | 12 |
| 37 | 3 | 22 | 65 | 150 | 22,9 | - | 14 | 9 |
| 38 | 5 | 24 | 65 | 79 | 23,3 | 5 | 15 | 14 |
| 39 | 4 | 26 | 86 | 149 | 22,8 | 4 | 16 | 15 |

*verbrennt vollständig

Beispiel 40:

100 Teile hoch schlagfestes Polystyrol (Shell 581) und 12 Teile des Salzes gemäss Beispiel 2 werden gemischt und bei 180°C extrudiert. Es werden folgende Werte erhalten:

| Schlagfestes Polystyrol | OI % | UL 94 |
|---|---|---|
| ohne Salz | 17,3 | vollständiges Abbrennen |
| + Salz des Beispiels 2 | 18,4 | VE 2. |

Beispiel 41:

100 Teile ABS-Polymer (®Cycolac T) werden mit 12 Teilen des Salzes gemäss Beispiel 2 vermischt, und das Gemisch wird bei 180°C extrudiert und verpresst. Man erhält folgende Werte:

| ABS-Polymer | OI % |
|---|---|
| ohne Salz | 16,8 |
| + Salz des Beispiels 2 | 20,3. |

Beispiel 42:

Je 100 Teile der unten angegebenen walzbaren Polyurethane werden mit 12 Teilen des Salzes gemäss Beispiel 2 vermischt, und das Gemisch wird bei 180°C zu einem Fell gewalzt. Man erhält folgende Werte:

| Polyurethan-Elastomer | OI % |
|---|---|
| Estane 58300® der Fa. B.F. Goodrich Co. | 20,2 |
| + Salz des Beispiels 2 | 22,4 |
| | |
| Estane 54600® der Fa. B.F. Goodrich Co. | 20,2 |
| + Salz des Beispiels 2 | 22,2. |

Beispiel 43:

100 Teile eines halogenfreien ungesättigten Polyesters der Fa. Jotun werden mit 12 Teilen des Salzes gemäss Beispiel 2 und 1 Teil Methylethylketonperoxid vermischt und bei Raumtemperatur gehärtet. Man erhält folgende Werte:

| Polyester | OI % |
|---|---|
| ohne Salz | 18,4 |
| + Salz des Beispiels 2 | 21,4. |

Beispiel 44:

100 Teile eines Bisphenol-A-Diglycidylethers mit einem Epoxidgehalt von 5,3 Aequiv./kg) werden bei 25°C mit 22 Teilen TMD (1:1-Gemisch aus 2,2,4-Trimethylhexamethylendiamin und 2,4,4-Trimethylhexamethylendiamin) und 40 Teilen des Salzes gemäss Beispiel 2 vermischt. Das Reaktionsgemisch wird bei 25°C begast, in eine geeignete Giessform gegossen, 18 Std. bei 25°C stehen gelassen und schliesslich während einer Stunde auf 100°C erhitzt. Das erhaltene Produkt ist ein opaker Feststoff. Man erhält die folgenden Werte:

| Epoxidharz | OI % | UL 94 |
|---|---|---|
| ohne Salz | 22,4 | vollständiges Abbrennen |
| + Salz des Beispiels 2 | 26,0 | VE 2. |

Beispiel 45:

100 Teile eines Bisphenol-A-Epoxidharzes mit einem Epoxidgehalt von 2,4 Aequiv./kg werden bei 135°C mit 30 Teilen Quarz und 40 Teilen des Salzes gemäss Beispiel 2 vermischt. Das erhaltene Gemisch wird in eine Giessform gegossen und während 16 Std. auf 135°C erhitzt. Das gehärtete Produkt ist ein opaker Feststoff, der sich beim Beflammen nicht entzündet. Man erhält die folgenden Werte:

| Epoxidharz | OI % | UL 94 |
|---|---|---|
| Harz mit $CaCO_3$ anstatt des Salzes des Beispiels 2 | 21 | vollständiges Abbrennen |
| + Salz des Beispiels 2 | 39,4 | VE 0. |

**Patentansprüche**

1. Zusammensetzungen enthaltend ein halogenfreies Polymer und als Flammhemmer mindestens ein Metall- oder Metalloidsalz einer Phosphonsäure der Formel I

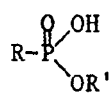

(I),

worin R geradkettiges oder verzweigtes Alkyl mit 1-3 C-Atomen, das gegebenenfalls durch ein oder mehrere Halogenatome oder eine oder mehrere Hydroxylgruppen substituiert ist, und R′ Wasserstoff oder eine Alkylgruppe mit 1-3 C-Atomen bedeuten, und worin das Metall oder Metalloid ausgewählt ist aus den Gruppen IIA, IIB, IIIA, IVA und VA des Periodensystems.

2. Zusammensetzungen nach Anspruch 1, worin R unsubstituiertes Alkyl mit 1-3 C-Atomen bedeutet.

3. Zusammensetzungen nach Anspruch 2, worin R Methyl ist.

4. Zusammensetzungen nach Anspruch 1, worin R′ Wasserstoff oder Methyl ist.

5. Zusammensetzungen nach Anspruch 1, worin das Metall oder Metalloid Magnesium, Calcium, Barium, Zink, Bor, Aluminium, Zinn oder Antimon ist.

6. Zusammensetzungen nach Anspruch 1, worin R und R′ je Methyl sind und das Metall Aluminium ist.

7. Zusammensetzungen nach Anspruch 1, enthaltend 0,1 bis 100 Gewichtsteile Salz, bezogen auf 100 Gewichtsteile des Polymeren.

8. Zusammensetzungen nach Anspruch 1, enthaltend 0,5 bis 30 Gewichtsteile Salz, bezogen auf 100 Gewichtsteile des Polymeren.

9. Zusammensetzungen nach Anspruch 1, enthaltend 2 bis 20 Gewichtsteile Salz, bezogen auf 100 Gewichtsteile des Polymeren.

10. Zusammensetzungen nach Anspruch 1, worin das Polymer ein Polyphenylenoxid oder -sulfid oder ein Gemisch davon mit einem Polystyrolpfropfpolymeren oder Styrolcopolymeren, ein Polyurethan oder Polyisocyanurat, ein Polyamid oder Copolyamid, ein Polyester oder ein ungesättigter Polyester, ein Polystyrol, ein Styrolpfropfcopolymer oder ein Styrol-Terpolymer oder ein vernetztes Epoxidharz ist.

**Claims**

1. A composition comprising a halogen-free polymer and as flame retardant at least one metal or metalloid salt of a phosphonic acid of the formula I:

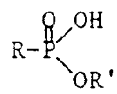

(I),

in which R is a straight-chain or branched alkyl having 1 to 3 carbon atoms which is optionally substituted by one or more halogen atoms or one or more hydroxyl groups; and R′ is hydrogen or an alkyl group having 1 to 3 carbon atoms, and in which the metal or metalloid is selected from Groups IIA, IIB, IIIA, IVA and VA of the periodic system.

2. A composition according to claim 1, in which R is unsubstituted alkyl having 1 to 3 carbon atoms.

3. A composition according to claim 2, in which R is methyl.

4. A composition according to claim 1, in which R′ is hydrogen or methyl.

5. A composition according to claim 1, in which the metal or metalloid is magnesium, calcium, barium, zinc, boron, aluminium, tin or antimony.

6. A composition according to claim 1, in which R and R′ are both methyl and the metal is aluminium.

7. A composition according to claim 1, containing from 0.1 to 100 parts by weight of salt per 100 parts by weight of polymer.

8. A composition according to claim 1, containing from 0.5 to 30 parts by weight of salt per 100 parts by weight of polymer.

9. A composition according to claim 1, containing from 2 to 20 parts by weight of salt per 100 parts by weight of polymer.

10. A composition according to claim 1, in which the polymer is a polyphenylene oxide or sulphide, or a mixture thereof with a polystyrene graft polymer or a styrene copolymer, a polyurethane or polyisocyanurate, a polyamide or copolyamide, a polyester or unsaturated polyester, a polystyrene, a graft copolymer of styrene or a terpolymer of styrene, or a crosslinked epoxide resin.

**Revendications**

1. Compositions contenant un polymère non halogéné et, comme ignifugeant, au moins un sel de métal ou de métalloïde d'un acide phosphonique répondant à la formule I :

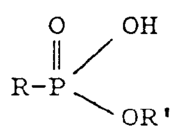

(I),

dans laquelle R représente un alkyle, linéaire ou ramifié, qui contient de 1 à 3 atomes de carbone et qui porte éventuellement 1 ou plusieurs atomes d'halogène ou 1 ou plusieurs radicaux hydroxy, et R′ représente l'hydrogène ou un alkyle contenant de 1 à 3 atomes de carbone, sel dont le métal ou le métalloïde est choisi dans les groupes IIA, IIB, IIIA, IVA et VA de la classification périodique.

2. Compositions selon la revendication 1 dans lesquelles R représente un alkyle non substitué qui contient de 1 à 3 atomes de carbone.

3. Compositions selon la revendication 2 dans lesquelles R représente un méthyle.

4. Compositions selon la revendication 1 dans lesquelles R′ représente l'hydrogène ou un méthyle.

5. Compositions selon la revendication 1 dans lesquelles le métal ou le métalloïde est le magnésium, le calcium, le baryum, le zinc, le bore, l'aluminium, l'étain ou l'antimoine.

6. Compositions selon la revendication 1 dans lesquelles R et R′ représentent chacun un méthyle et le métal est l'aluminium.

7. Compositions selon la revendication 1 qui contiennent de 0,1 à 100 parties en poids du sel pour 100 parties en poids du polymère.

8. Compositions selon la revendication 1 qui contiennent de 0,5 à 30 parties en poids du sel pour 100 parties en poids du polymère.

9. Compositions selon la revendication 1 qui contiennent de 2 à 20 parties en poids du sel pour 100 parties en poids du polymère.

10. Compositions selon la revendication 1 dans lesquelles le polymère est un poly-(oxy-phénylène), un poly-(thio-phénylène) ou un mélange de ceux-ci avec un polymère greffé du polystyrène ou un copolymère du

styrène, un polyuréthanne ou un poly-isocyanurate, un polyamide ou un copolyamide, un polyester ou un polyester insaturé, un polystyrène, un copolymère greffé du styrène, un terpolymère du styrène ou une résine époxydique réticulée.